# EUROPEAN PATENT APPLICATION

(11) **EP 3 585 079 A1**
(43) Date of publication of application: **25.12.2019**
(21) Application number: 18182548.0
(22) Date of filing: 09.07.2018
(51) Int. Cl.: H04W 4/02

(54) **METHOD FOR PROVIDING GEOSPATIALLY LIMITED ACCESS TO DIGITALLY STORED DATA**

(30) Priority: 18.06.2018 EP 18178374
(71) Applicant: Greenfield Berlin UG (haftungsbeschränkt), 10969 Berlin (DE)
(72) Inventor: The designation of the inventor has not yet been filed
(74) Representative: Schulz Junghans Patentanwälte PartGmbB

(57) **Abstract**

The invention relates to a method and a computer program for providing geospatially limited access to digital data, including, transmitting digital data, such as a file, from a portable data-providing device to an external server, storing the transmitted digital data on the external server, associating the digital data with at least one geospatial location, at the external server receiving a request from a requesting portable device to provide the digital data to the requesting portable device, and the server granting access to the digital data stored on the server to the requesting portable device, only if the requesting portable device is within a predefined receiving area around the at least one geospatial location associated with the digital data.

## Description

### TECHNICAL FIELD

The invention relates to a method and a computer program for providing geospatially limited access to digitally stored data, such as electronic files.

For sharing of digital data between users, several methods are known in the art. A common way of sharing digital data involves a first user that gives permission to a second user to access the digital data of the first user.

The digital data, often in the form of a digital file, is for example stored on a computer, such as a server. Known implementations of such sharing methods comprise storing of the digital data of a first user in a so-called "cloud", wherein a second user, once permission is granted, can access the file in the cloud.

The term cloud refers to a server or a server system that is for example provided by a specialized provider and accessible remotely over a network connection, for example over the Internet.

Various safety and encryption methods are available to allow safe sharing between users.

On the other hand, portable devices, commonly also referred to as mobile devices, such as for example cellular phones, smart phones, tablets, smart watches etc., comprise means to provide access to a wireless data network for transmitting digital data between the cloud and/or other portable devices.

Thus, sharing of digital data is often facilitated via portable devices.

WO 2013/003932 A1 teaches how digital data is shared between two portable devices, by establishing a direct, ad-hoc peer-to-peer, connection between the two portable devices. A first portable device, the data-providing device - transmits the digital data to the data-requesting device once the connection is established between the two portable devices.

However, the drawback in this method is that the digital data is not accessible by the portable requesting device, when the portable data-providing device is not within a limited proximity of the data-providing device. The proximity is for example given by the range of the radio signal used for transmitting the digital data.

On the other hand, sharing of digital data via a server is also well-known in the art. Here, the data-providing device provides the digital data to the requesting device via an external server. The digital data can be stored at an earlier time point on the server and the requesting device can access the data, even in case the data-providing device is not present within a limited proximity.

In the server-based methods, the digital data can be accessed by the requesting device without any spatial constraint.

While this solution seems a convenient approach for sharing digital data, it lacks the possibility to geospatially constrain the access to the data known from the peer-to-peer sharing methods between two mobile devices.

The present invention aims to associate a physical location to data in analogy to "real-world" objects that can be picked-up (accessed) and dropped (shared) at specific locations between at least two users.

This problem is solved with a method for providing geospatially limited access to digital data having the features of claim 1. Moreover, the problem is solved by a computer program and a computer program product.

Advantageous embodiments are listed in the subclaims. All disclosed embodiments and combinations thereof can serve as the basis for novel subject matter.

According to claim 1, a method for providing geospatially limited access to digital data comprises at least the steps of:
a) Transmitting digital data, such as a file, from a portable data-providing device to an external server;
b) Storing the transmitted digital data on the external server;
c) Associating the digital data with at least one geospatial location;
d) At the external server receiving a request from a portable requesting device to provide the digital data to the portable requesting device, particularly wherein the portable requesting device comprises a means or a module for wireless data transfer from the external server;
e) The server granting access to the digital data stored on the server to the portable requesting device, only if the portable requesting device is within a predefined receiving area around the at least one geospatial location associated with the digital data.

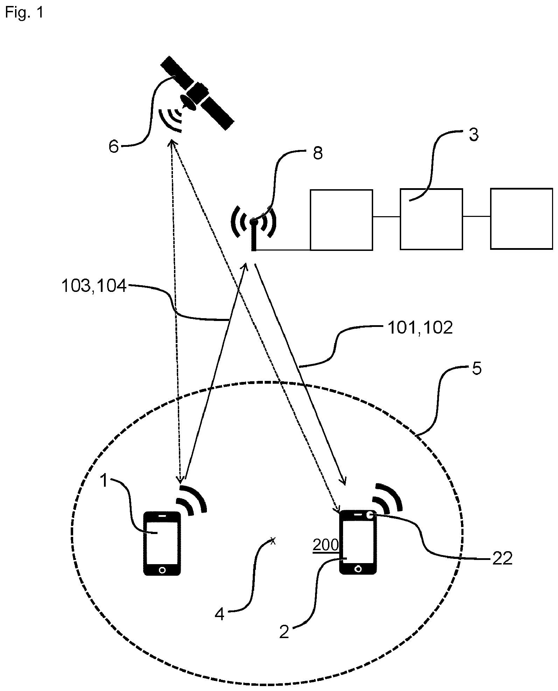

The method according to an exemplary embodiment of the disclosure is not a peer-to-peer system established between two portable devices. Instead an exchange of digital data between the data-providing device and the portable requesting device is facilitated via the external server (see e.g. Fig. 1).

The term "data-providing" and "requesting" in the context of the portable devices, refers to the function or role of the respective portable device. Thus, depending on which portable device provides (or shares) the digital data, and which portable device requests the access to the digital data, the terms "data-providing" and "requesting" are attributed to the respective portable device.

The portable data-providing device and the portable requesting device are particularly two different devices that do not comprise each other. Thus, the portable data-providing device and the portable requesting device as well as the external server are particularly physically separated entities, apparatuses networks or systems.

The external server is particularly a different device or system that is particularly not comprised by the portable data-providing device or the portable requesting device. That is, the external server is particularly a physically separated device or system other than the portable data-providing device or the portable requesting device, hence the term "external".

A connection between the external server and the portable devices is particularly facilitated by means of wireless communications, for example by radio waves.

The external server is for example a server system such as a cloud.

The method according to the invention allows an upload, e.g. the data provision by the portable data-providing device and the download, e.g. by the portable requesting device, to be performed independently and particularly non-simultaneously. Therefore, the portable data-providing device does not have to be present in order for the portable requesting device to receive the digital data, i.e. the data transfer can take place time shifted or time delayed.

The term "geospatial location" particularly refers to a geographic location or position on earth.

The transmission of the digital data from the portable data-providing device to the external server is particularly a wireless, for example a radio transmission based on electro-magnetic waves.

The external server is particularly a computer network, a particularly decentralized server system, such as a cloud, a particularly centralized computer network, or a peer-to-peer computer network.

The digital data can be stored in form of an encrypted data file and/or with a blockchain, such that the digital data cannot be manipulated without authorization.

According to another embodiment of the invention, the digital data is stored in a blockchain, i.e. the external server comprises a blockchain or is configured to host and execute a blockchain method.

The association of the geospatial location with the digital data can for example be facilitated on the portable data-providing device or on the external server.

Once the digital data is associated with the geospatial location, it is possible to limit the area within which the digital data can be accessed.

The association can be a virtual association on a data storage of the external server.

The term "geospatial location" particularly refers to a true geospatial location, e.g. a position on earth or above or below, and is particularly not a virtual position e.g. in a computer game or in a virtual space, where virtual objects are dropped and picked up. The geospatial location can for example be expressed by a GPS coordinate, or coordinate expressed with a longitude and a latitude of the globe. Thus, the geospatial location particularly refers to a point-like geographic position in three-dimensional space.

The geospatial location particularly refers to a unique geographic location, such as a unique position on the globe i.e. on earth.

The digital data is particularly wirelessly transmitted to the portable requesting device, such that the transfer of the digital data from the portable data-providing device and the portable requesting device is performed completely wireless and particularly based on radio transmission.

The term "granting access" particularly refers to the external server allowing the portable requesting device to access the digital data and/or particularly to download or stream the digital data from the external server.

The term "download" particularly refers to a transfer of digital data from one device or system to another device or system, such that particularly a digital copy or a duplicate is created on the receiving device. Additionally or alternatively, the digital data can be deleted from the external server after the digital data has been transferred to the portable requesting device. Particularly with regard to digitally unique objects such as digital money, e.g. bitcoins, or digital art, the term "download" also refers to shifting the digital data along a blockchain.

The predefined receiving area is particularly an area or volume around the geospatial location. The predefined receiving area particularly is and corresponds to a physical space.

The term "digital data" particularly refers to a digital file structure or a digital data file that is particularly configured to be processed, e.g. opened and viewed or edited by a dedicated software program installed on a computer of a user receiving or transmitting the digital data. The digital data is optionally at least one of:
- an image file;
- a movie file;
- a graphic file;
- a document file, such as a text document or a document for presentation, calculation, or editing of data, such as images, text, and/or graphics;
- a blockchain item;
- a hashtag; and/or
- digital money or currency.

The digital data is particularly configured to be streamed or downloaded in its entirety before an execution on the portable requesting device.

The request from the portable requesting device is for example transmitted wirelessly by means of radio waves and received by the external server.

It is noted the order of the method steps; for example the steps a) to e) can be changed and that the alphabetic numerals only serve as a means of identification of the method steps.

According to another embodiment of the invention, the portable requesting device transmits a request to access the digital data to at the external server before the digital data is transmitted to or stored on the external server by the portable data-providing device.

According to this embodiment, the portable requesting device particularly initiates the method according to the disclosure, i.e. first a request to get access to the digital data can be made and then the digital data can be uploaded to the external server and the server grants access to the digital data.

According to another embodiment of the invention, the data-providing device and the portable requesting device have shared identification information in order to limit access to the digital data on the server and particularly in order to be able to send a request to the external server by a specific portable requesting device.

According to another embodiment of the disclosure, the digital data is transmitted to the portable requesting device after access to the digital data is granted by the external server, wherein the digital data is particularly downloaded and particularly stored on the portable requesting device.

In some embodiments of the disclosure, only a single copy of the digital data is sustained particularly such that the digital data is either stored on the external server or on the portable requesting device.

According to another exemplary embodiment of the invention, the at least one geospatial location is a geospatial location determined from a position of the portable data-providing device at a predefined instant, for example wherein the predefined instant corresponds to or is the time when the portable data-providing device makes an initial request or when the portable data-providing device is initiated to transmit the digital data to the external server.

This embodiment allows a precise determination of the time point, i.e. the predefined instant, at which the position of the portable data-providing device is determined for association and determination of the predefined receiving area and particularly of the geospatial location.

The predefined instant can be provided by a user of the portable data-providing device, for example by inputting a predefined command to the portable data-proving device. Alternatively, the geospatial location is determined at the time point, when the upload of the digital data to the external server is initiated or starts.

The position of the portable data-providing device is particularly a position that allows determining a geospatial location, i.e. particularly a unique geographic location such as a unique position on earth.

The determination of the position of the portable data-providing device can be error-prone particularly due to technical reasons and can differ from the actual position of the portable data-providing device.

According to another exemplary embodiment of the invention, the at least one geospatial location is a location within a predefined upload area extending around the position of the portable data-providing device, for example wherein the at least one geospatial location corresponds to or is identical to the position of the portable data-providing device.

The predefined upload area is particularly a physical space, such as an area or volume and is associated with a unique location on earth, above or below the surface of the earth.

According to another exemplary embodiment of the invention, the at least one geospatial location is provided by the portable data-providing device, wherein a user of the portable data-providing device provides the at least one geospatial location by means of a user input such as by providing, e.g. by copy and paste, a location link, or by selecting the geospatial location on a digital map service, like google maps, such that the geospatial location can be outside of the upload area of the portable mobile data-providing device.

According to another exemplary embodiment of the invention, a plurality of geospatial locations are associated with the digital data, wherein the digital data is provided from the external server to the portable requesting device, only if the portable requesting device is within the predefined receiving area of at least one geospatial location of the plurality of geospatial locations associated with the digital data, for example wherein the geospatial locations correspond to a plurality of positions of the portable data-providing device at predefined instants.

It is noted that some or all of the predefined receiving areas can be of a different size or radius.

According to this embodiment it is also possible to associate each of the plurality of geospatial locations to a different portable requesting device, such that the digital data is accessible for different portable requesting devices at different geospatial locations only.

According to another embodiment of the invention, the at least one geospatial location is determined from the position of the portable data-providing device by means of a positioning system such as a geospatial positioning system, particularly a global navigation satellite system, such as GPS, GLONASS, BDS, Galileo etc. or a network-based positioning system, such as a WIFI-positioning system or a GSM-based positioning system, particularly based on multilateration or other techniques known to the person skilled in the art.

According to another exemplary embodiment of the invention, authorization information is provided to or generated by the external server, wherein the authorization information comprises information about at least one portable mobile device, a computer program-ID, at least one user-ID, and/or a code, wherein access to the digital data on the external server is only granted to the portable requesting device, if validation information provided by the portable requesting device to the external server, particularly comprised in the request, matches the authorization information, particularly wherein the match is confirmed by and on the external server.

The authorization information can be hash value, a code, a password, MAC address(es), a User-ID, or other information that can be associated with the portable requesting device and/or to a user ID provided by the portable requesting device.

The comparison of the validation information with the authorization information and potentially a processing of the validation information prior to the comparison, such as generation of a hash value, is particularly performed on the external server or another third device that provides the result of the comparison to the external server.

This embodiment allows for secure sharing of the digital data at the geospatial location. Furthermore, it allows for selecting specific portable requesting devices that are granted access to the digital data on the external server.

According to another exemplary embodiment of the invention, a position of the portable requesting device is repeatedly, e.g. continuously, or intermittently compared to the geospatial location associated with the digital data, wherein, if the position of the portable requesting device is within the predefined receiving area of the geospatial location associated with the digital data, the external server sends proximity information to the portable requesting device, wherein the proximity information is indicative of the geospatial location of the digital data and particularly the possibility to access the digital data.

The proximity information can have various forms. For example, the proximity information can be setting an alert on the portable requesting device. Note that the portable requesting device does not need to send a request to the external server, but the external server particularly informs the portable requesting device, that a request to access the digital data can be made and that access to the digital data can be granted.

Upon receipt of the proximity information by the portable requesting device, the portable requesting device can provide the user with information that access to the digital data is possible from the current position of the portable requesting device. The information can be a sound signal, a text message, or a graphical signal issued by the portable requesting device.

The position of the portable requesting device can be monitored by means of common location methods as disclosed above, e.g. by means of a positioning system.

According to another exemplary embodiment of the invention, the portable requesting device comprises a user interface, wherein a signal is generated by the user interface, wherein the signal is indicative of the geospatial location associated with the digital data, wherein the signal is configured to indicate a direction towards and/or a position of the geospatial location associated with the digital data, particularly such that a person is enabled to find the geospatial location associated with the digital data by means of the signal.

This embodiment allows a user of the portable requesting device to find the geospatial location particularly to find the predefined receiving area within which access to the digital data can be provided to the requesting portable device.

The signal is optionally configured such that a user of the portable requesting device can distinguish, whether he moves closer to the geospatial location or further away. Thus, the signal has a signal characteristic that is configured to provide this information.

In order to generate the signal, the portable requesting device might receive the position of the geospatial location from the external server or the server provides the portable requesting device the information regarding the direction towards the geospatial location.

A user interface is a means associated with or comprised by the portable requesting device that allows for a user to receive and/or to provide information from or to the portable requesting device.

According to another exemplary embodiment of the invention, the user interface is a display, such as a touch screen, wherein the signal is an image comprising a graphical representation, such as a symbol, text, an icon or a color indicative of the geospatial location associated with the digital data, wherein the graphical representation is configured to indicate a direction towards and/or a position of the geospatial location associated with the digital data, particularly such that a person is enabled to find the geospatial location associated with the digital data by means of the graphical representation in the image.

For example the color displayed on the display could change depending on whether the user moves towards or away from the geospatial location. For example when the user moves away from the geospatial location the color gets colder, i.e. the color comprises more blue-tones and when the user moves towards the geospatial location the color becomes warmer, i.e. the color comprises more red-tones.

Alternatively or additionally, a graphical symbol, such as an arrow could be displayed, wherein the symbol points towards the direction of the geospatial location.

Alternatively or additionally, a text could inform about the distance towards the geospatial location or the predefined receiving area.

The term "image" in the context of the specification is therefore to be understood very broadly as any kind of feature displayable on the display of the portable requesting device.

According to another exemplary embodiment of the invention, the portable requesting device comprises an image sensor, wherein the image sensor records the image within which the graphical representation is arranged, particularly by processing said image e.g. on the requesting mobile device.

The image sensor is for example a camera or a camera system configured to generate a three-dimensional representation of the field of view of the camera system.

The image can be a three- or two-dimensional representation of the field of view of the image sensor. The graphical representation can be arranged at the position in the image corresponding to the geospatial location.

According to another exemplary embodiment of the invention, the user interface is an output device for sound, such as a loudspeaker, an earphone or the like, wherein the signal is a sound indicative of the geospatial location associated with the digital data, wherein sound is configured, e.g. by its pitch or by voice/vocal instructions, to indicate a direction towards and/or a position of the geospatial location associated with the digital data.

This embodiment may be used in combination with the embodiment relying on a different kind of signal, such as an image, for indicating the position or direction towards the geospatial location.

This embodiment allows for finding the geospatial location without looking at the portable requesting device, such that a user can focus e.g. on street traffic.

Alternatively or additionally, the user interface can be vibration device comprised by the portable requesting device, wherein the vibrations are the signal indicative for the position or direction towards the geospatial location.

This embodiment allows for a silent and invisible guidance towards the geospatial location.

According to another exemplary embodiment of the invention, access to the digital data is granted to the portable requesting device only if the request is sent to or received by the external server prior to a predefined expiration time or a predefined expiration date.

This embodiment allows to temporally limit access to the digital data. After the predefined expiration time or date, the digital data is not available anymore to the portable requesting device.

According to another exemplary embodiment of the invention, when the portable requesting device has received the digital data, the digital data can be modified, e.g. deleted and/or edited by the portable requesting device and the modified digital data can be returned to the external server by the portable requesting device, particularly wherein the transmitted modified digital data replaces the digital data stored on the external server Optionally, the modified data can be returned to the external server independently of the position of the portable requesting device.

According to another exemplary embodiment of the invention, when the portable requesting device has received the digital data, modifications to the digital data on the external server are transmitted to the portable requesting device independently of the position of the portable requesting device. Optionally, the modifications are performed on the digital data received by and particularly stored on the portable requesting device, e.g. by downloading anew or by modifying the digital data on the portable requesting device 2.

These modifications particularly comprise deletion of the digital data or editing of the digital data particularly by the data-providing device.

This embodiment particularly allows for sustaining control for the portable data-providing device, or the user of the data-providing device over the digital data, even if the digital data has been downloaded, i.e. transmitted to the portable requesting device.

Moreover, this embodiment allows updating the digital data on the portable requesting device.

According to another exemplary embodiment of the invention, the digital data is a digital file or a digital file structure.

This embodiment allows for sharing files between at least two portable devices.

The digital data is particularly a hyper-link, a file identifier, a data stream, a hash tag or a blockchain item.

Digital data is particularly not digital data serving the purpose of establishing communication or other background processes necessary to facilitate communication between the portable device and external server, but particularly relates to digital objects configured and designed to be presented to a user of the portable device.

This embodiment allows for sharing links or accesses to networks between at least two portable devices.

According to another exemplary embodiment of the invention, the portable data-providing device has a geospatial positioning module configured and arranged to determine the position of the portable data-providing device.

According to another embodiment of the invention, the portable requesting device has a geospatial positioning module configured and arranged to determine position of the portable data-providing device.

Such a geospatial positioning module can be configured for a satellite positioning system, such as GPS and the like as elaborated above, a land-based-positioning system, e.g. based on GSM as elaborated above, and/or a for example a WIFI positioning system.

According to another exemplary embodiment of the invention, the predefined receiving area around the geospatial location associated with the digital data has a radius of less than 500 m (meters), for example less than 5 m or less than 1 m.

Optionally, limiting the predefined receiving area to such a radius, allows for a concise and well-controllable access of the digital data.

Limiting the radius to one of the radii according to this embodiment the digital data is provided with essentially a physical embodiment that is comparable to real-world objects located on earth that can be put and picked up also only at one position simultaneously.

A large radius (e.g. 50 m to 500 m) allows for uncomplicated access to the digital data by the portable requesting device, which particularly accounts for the achievable positioning tolerances of the positioning systems that are sometimes limited due to technical constraints or influences of the environment.

On the other hand, a comparably small radius (e.g. below 5 m) allows for a more "hidden" and real object-like character of the digital data.

Alternatively or additionally, the predefined receiving area is determined by the positioning accuracy of the positioning system, the data-providing device and/or the portable requesting device.

This embodiment recognizes the local circumstances for example with respect to the GPS signal and the achievable positioning accuracy.

The radius particularly extends along three-dimensions (e.g. of a coordinate system), for example including also extending vertically (in the z-direction) with respect to the earth's surface.

According to another exemplary embodiment of the invention, the size of the predefined receiving area or the radius of the predefined receiving area can be adjusted by a user of the portable data-providing device, particularly by means of a user input..

This embodiment allows for a user-defined character of the digital data, e.g. more "hidden" and locally constrained or expansively accessible.

According to another embodiment of the invention, the size or radius of the predefined upload area can be adjusted by the user of the portable data-providing device.

According to another exemplary embodiment of the invention, the digital data is only provided to the portable requesting device or the access to the digital data is granted to the portable requesting device, only if the portable data-providing device is within the predefined receiving area of the geospatial location associated with the digital data.

This embodiment requires the portable data-providing device to be present within the predefined receiving area in order for the portable requesting device to access the digital data.

This embodiment corresponds essentially to a real world object being handed over from a user of the portable data-providing device to a user of the portable requesting device, which provides an almost physical, "real-world" object-like embodiment to the digital data.

According to another exemplary embodiment of the invention, the access to the digital data is granted to the portable requesting device particularly only if or when the data-providing device is outside the predefined receiving area and/or outside the predefined upload area.

This embodiment could not be provided by means of a peer-to peer connection established between the data-providing device and the requesting device.

According to another exemplary embodiment of the invention, the portable data-providing device and the portable requesting device are not connected to each other.

According to another exemplary embodiment of the invention, the portable data-providing device and the portable requesting device are not directly connected to each other.

This embodiment does not allow a peer-to-peer connection between the portable devices for sharing the digital data.

According to another exemplary embodiment of the invention, particularly when the portable requesting device is granted access, the digital data is transmittable or is transmitted from the external server to the portable requesting device only once. Optionally when the digital data is received completely by the portable requesting device, the digital data is not transmittable or transmitted a second time to the portable requesting device and/or to any other portable requesting device.

This embodiment renders the digital data unique, like a real world object. The digital data therefore has similar characteristics to real world objects.

According to another exemplary embodiment of the invention, the digital data may be transmittable or transmitted more than once from the external server to the portable requesting device.

The term "transmitted" and "transmittable" particularly refer to a successful transmission, i.e. not to an interrupted or corrupted transmission.

The invention also refers to a computer program, the computer program according to the invention comprises computer program code, wherein when the computer program is run on a computer, such as the external server, a computerized device, and/or a portable device such as the portable data-providing device and/or the portable requesting device, the computer program executes the method according to one of the preceding embodiments.

The invention also refers to a computer program product, the computer program product according to the invention comprises computer program code, wherein, when the computer program is run on a computer, such as the external server, a computerized device, and/or a portable device such as the portable data-providing device and/or the portable requesting device, the computer program executes the method according to one of the preceding embodiments.

The computer program product can for example be an application, also referred to as an "app".

### Further Definitions

In the context of the specification of the invention, the following definitions are given.

### Network

The term 'operationally connected' denotes a computerized network connection or communication via a network, e.g. a cellular network, wireless network such as radio, Bluetooth or WiFi, a wired network such a Local Area Network (LAN) or Wide Area Network (WAN), as well as a connection via the Internet.

### Computerized device

The term "computerized device" or "computerized system" or a similar term denotes an apparatus comprising one or more processors operable or operating according to one or more computer programs.

### Portable device

In the context of the specification, the term "portable device", as for example "portable data-providing device" or "portable requesting device", refers to a portable computer, and/or a portable computerized device and/or to a portable wireless device such as a personal digital assistant, a portable gaming device, a cellular phone, a smart phone, a tablet, a tablet computer, a laptop computer, a smart watch, or other computerized devices or computers that are designed and built to be portable or carried around by a person.

As such, a portable device comprises a battery source for providing the portable device with electric energy.

A portable device - also referred to in the art as a mobile device -optionally comprises a small computer, which may be small enough to be held and operated in the hand and having an operating system capable of running mobile apps - software applications designed to run on mobile devices. A portable device is therefore a computerized device that is portable and optionally weighs less than 500 g.

A portable device, such as a mobile phone, a smart phone, a smart watch, a portable music player or a tablet computer, particularly comprises at least one processor, the so-called CPU (central processing unit). Furthermore, a portable device particularly comprises means for cellular network connectivity for connecting to a mobile network, such as for example GSM (Global System for Mobile Communications), 3G, 4G or 5G, CDMA (Code Division Multiple Access), CDMA2000, UTMS (Universal Mobile Telecommunications System), or LTE (Long Term Evolution).

The portable device particularly comprises a display screen with a numeric or alphanumeric keyboard or a touchscreen configured to provide a virtual keyboard and buttons (icons) on-screen. The portable device is particularly configured to connect to the Internet and interconnect with other computerized devices via Wi-Fi, Bluetooth or near field communication (NFC). Integrated cameras, digital media players, mobile phone and GPS capabilities are common.

The portable device is particularly configured to provide a time reference for apps and data, wherein said time reference is provided by a time reference system such as an internal clock or timer of the portable device or by external signals that are for example received by the Internet, the mobile network, or GPS. The time reference can be adjusted for different time zones.

### Computer

The terms 'processor' or 'computer', or system thereof, are used herein as the ordinary context in the art, such as a general purpose processor or a microprocessor, RISC processor, or DSP, possibly comprising additional elements such as memory or communication ports. Optionally or additionally, the terms 'processor' or 'computer' or derivatives thereof denote an apparatus that is capable of carrying out a provided or an incorporated program and/or is capable of controlling and/or accessing data storage apparatus and/or other apparatus such as input and output ports. The terms 'processor' or 'computer' particularly denote also a plurality of processors or computers connected, and/or linked and/or otherwise communicating, possibly sharing one or more other resources such as a memory.

As used herein, the terms 'server' or 'client' or 'backend' denote a computerized device providing data and/or operational service or services to one or more other computerized devices or computers.

The terms 'software', 'program', 'software procedure' or 'procedure' or 'software code' or 'code' or 'application' or 'app' may be used interchangeably according to the context thereof, and denote one or more instructions or directives or circuitry for performing a sequence of operations that generally represent an algorithm and/or other process or method. The program is stored in or on a medium such as RAM, ROM, or disk, or embedded in a circuitry accessible and executable by an apparatus such as a processor or other circuitry.

The processor and program may constitute the same apparatus, at least partially, such as an array of electronic gates, such as FPGA or ASIC, designed to perform a programmed sequence of operations, optionally comprising or linked with a processor or other circuitry.

As used herein, without limiting, a module represents a part of a system, such as a part of a program operating or interacting with one or more other parts on the same unit or on a different unit, or an electronic component or assembly for interacting with one or more other components.

As used herein, without limiting, a process represents a collection of operations for achieving a certain objective or an outcome.

The term 'configuring', 'designing' and/or 'adapting' for an objective, or a variation thereof, implies using at least a software and/or electronic circuit and/or auxiliary apparatus designed and/or implemented and/or operable or operative to achieve the objective.

A device storing and/or comprising a program and/or data constitutes an article of manufacture. Unless otherwise specified, the program and/or data are stored in or on a non-transitory medium.

In the context of embodiments of the present disclosure, by way of example and without limiting, terms such as 'operating' or 'executing' imply also capabilities, such as 'operable' or 'executable', respectively.

Conjugated terms such as, by way of example, 'a thing property' imply a property of the thing, unless otherwise clearly evident from the context thereof.

In the following various methods and systems are disclosed for determining the position of the portable data-providing device and/or the portable requesting device.

Global navigation satellite systems (GNSS) such as NAVSTAR GPS (US), GLONASS (Russia), Galileo (Europe), BeiDou-3 (China) or local systems: IRNSS (India), QZSS (Japan).

Moreover, the positioning can be performed by so-called Satellite-based augmentation systems (SBASs). SBASs provide a set of ground stations with well-known positions on earth. These ground stations take constant measurements of the GNSS signals. The measurements are used to calculate offsets, errors or environmental factors that may impact the GNSS accuracy. The results are then transferred to geostational satellites that broadcast the data to any SBAS capable device in range. The portable data-receiving device and the portable requesting device are particularly configured to receive and process SBAS data. There is a variety of SBAS systems such as WAAS (US), EGNOS (Europe), MSAS (Japan), GAGAN (India), SDCM (Russia), QZSS-SBAS (Japan), SNAS (China). Moreover, most GNSS-Chips in cell phones support SBAS. The achievable position accuracy with SBAS is about 1 - 3 meters.

Alternatively or additionally, so-called differential GPS (D-GPS) can be used for determining the position of the portable devices. D-GPS works just like SBAS but the data is not transmitted via satellite signals, instead it is transmitted by base stations on earth.

Furthermore, assisted GPS (A-GPS) can be used for positioning the portable devices. A-GPS allows locking on satellite signals more quickly and thus reduces energy consumption of the positioning method.

In case a more accurate positioning is desired, a carrier wave phase measurement method can be implemented in the method according to the invention, in order to determine the position of the portable data-providing device and/or the portable requesting device

The carrier wave phase measurement method is based on determining the phase of a carrier wave from a satellite when it reaches the respective portable device. With the phase information the positioning accuracy can be as good as 20 cm or better.

The carrier wave phase measurement particularly determines a phase difference between two receiving modules in the respective portable device or a phase difference between two different frequency bands is estimated from a single module, which allows an absolute, i.e. global positioning on the earth.

In combination with D-GPS, or AGPS an even higher positioning accuracy can be achieved.

The technology on satellite geolocation has evolved to the point where dual frequency GPS is possible, where more than one frequency band is possible. By this method accuracy is increased to a 30 cm radius.

Besides satellite-based positioning methods for the portable devices, WIFI positioning system can used for determining the position of the portable devices. For this, the portable devices are equipped with a WIFI module. WIFI positioning is particularly achieved with the IEEE 802.11 ms standard that is based on time of flight measurements between the portable device and the network connecting hardware.

### BRIEF DESCRIPTION OF THE DRAWINGS

The present disclosure will be understood and better appreciated from the following detailed description taken in conjunction with the drawings. Identical structures elements or parts, which appear in more than one figure, are generally labelled with the same or similar number in all the figures in which they appear. It should be noted that the elements or parts in the figures are not necessarily shown to scale and elements or parts may be relatively larger or smaller than actually shown.
Fig. 1 is a schematic illustration of a system for implementing a method of providing geospatially limited access to digitally stored data, according to an exemplary embodiment of the disclosure;
Fig. 2A is a schematic illustration of a portable data providing device outside of a predefined receiving area and a portable data requesting device within the predefined receiving area, according to an exemplary embodiment of the disclosure;
Fig. 2B is a schematic illustration of a portable data providing device within a predefined upload area and a portable data requesting device within a predefined receiving area that coincides with the predefined upload area, according to an exemplary embodiment of the disclosure;
Fig. 2C is a schematic illustration of a portable data providing device within a predefined upload area and a portable data requesting device within a predefined receiving area that partially overlaps with the predefined upload area, according to an exemplary embodiment of the disclosure; and
Fig. 3 is a schematic illustration of two possible timelines for providing a data file and position by a portable data providing device and downloading the data file by a questing device, according to an exemplary embodiment of the disclosure.

### Illustrative Examples

Exemplary embodiments of the invention are detailed in the following by means of a figure description. Fig. 1 shows a diagram laying out the interactions of the devices involved in the method according to the invention, namely the external server 3 and at least two portable devices 1, 2.

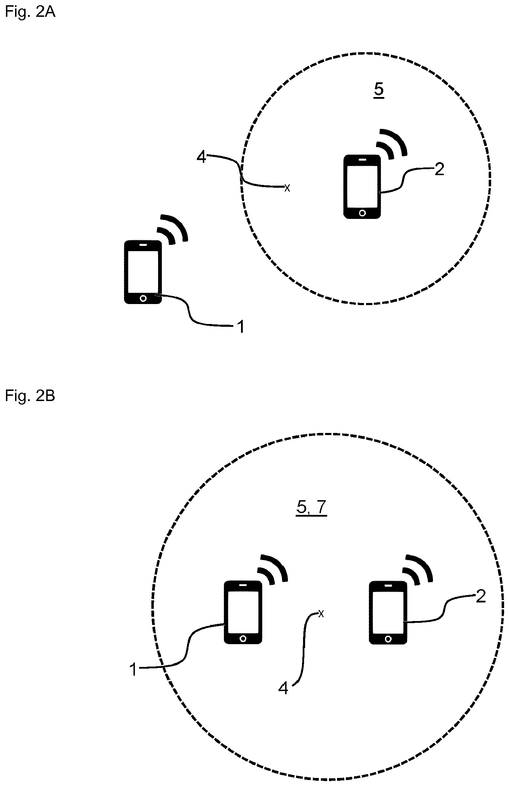

Figures 2A to 2C show various embodiments of the method according to the invention.

The user of a portable device 1 intends to share a digital file with another user having a portable device 2. In this example the portable devices 1, 2 are smart phones, though any other computerized portable device would be suitable as well.

The smart phone 1 of the user intending to share the digital file is referred to as the data-providing device 1, as the digital file is initially stored on smart phone 1.

Alternatively, the digital file is already stored on an external server 3 and access to the digital file is facilitated also for the data-providing smart phone 1 by means of a radio connection 103, 104.

In case the digital file is not yet stored on the external server 3, the data-providing device 1 uploads 103 the file to the external server 3. This can be done for example by means of a WIFI connection or a GMS network 8.

Simultaneously, more precisely, when the upload starts, the position of the portable data-providing device 1 is determined by means of a global positioning system 6, e.g. by GPS. This position is then transmitted 104 to the external server 3 and associated with the digital file being uploaded 103. The position associated with the digital file is referred to as the geospatial location 4.

In case the digital file is already stored on the external server 3, the position of the data-providing device 1 is transmitted for example when a corresponding user input is provided to the data-providing device 1.

It is noted that the digital file can therefore be dropped 103,104 - similar to a real-world object - at a location that is determined by the user of the data-providing device 1.

Once the geospatial location 4 is associated with the digital file, the file can be downloaded or accessed 102 by the other user, whose smartphone 2 is referred to as the portable requesting device 2.

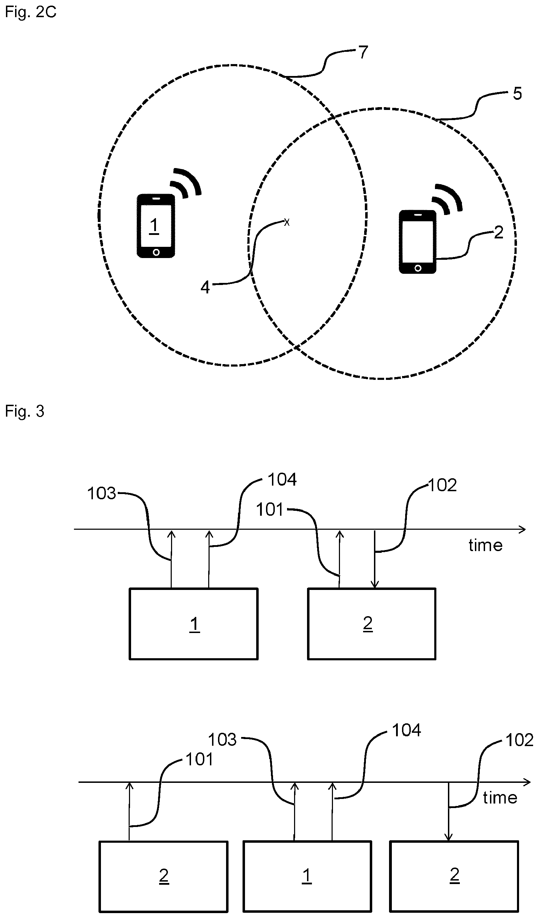

However, access 102 to the digital file is only granted to the portable requesting device 2, if the device 2 is within a predefined receiving area 5 around the geospatial location 4. This predefined area 5 has a radius of several meters or even centimetres, such that the digital file essentially comprises a real-world object-like characteristic with respect to its accessibility, i.e. the digital file can only be accessed 102 as if the digital file would be located at the geospatial location 4 associated with it - similar to a real-world object that can be picked-up, only if the person is in its direct proximity. The data-providing device 1 is not required to be within the receiving area 5 (e.g. Fig. 2A and Fig. 2C).

Due to the specific system architecture comprising two smartphones 1, 2 and an external server 3, the digital file can be picked up by the user of the requesting device 2 at a later time than the time when file has been dropped 103, 104 from the user of the data-providing device 1 - like a real world object.

For accessing 102 the digital file, the portable requesting device 2 at some point has to send a request 101 to the external server. This request 101 can be sent prior to the digital file being stored on the external server 3 (see e.g. Fig. 3 lower panel). However, such a request 101 will of course not yield immediate accessibility of the data file, as the data file first has to be provided to the external server 3 by the data-providing device 1 or at least an authorization is given by the data-providing device 1 to the server 3 to grant access to the digital data.

For example, if the user of the data-providing device 1 and the user of the requesting device 2 are in contact, e.g. in a face-to-face conversation, and a decision is made to share the data file, the request 101 might be made prior to the file being accessible. As the user of the data-providing device 1 is in the close proximity of the user of the requesting device 2 the predefined receiving area 5 of for example 5 m extends around both persons, such that the requesting device 2 can access 102 the digital file once it is uploaded to the server 3 or access permission is given (e.g. Fig. 2B).

Alternatively, in a different scenario, the user of the data-providing device 1 receives a request 101 from the requesting device 2 and can approve said request 101. Then, by determining the position of the data-providing device 1, the geospatial location 5 and thus the radius of accessibility (i.e. the predefined receiving area 5) is defined by the data-providing device 1.

According to another exemplary embodiment of the invention, the digital file can be received 102 by the portable requesting device 2 only once, and only a single copy of the digital file is sustained by the external server 3 and the portable devices 1, 2. This embodiment creates an even closer analogy to real-world object that cannot be copied infinitely.

Another exemplary variant provides a predefined upload area 7 and a predefined receiving area 5 (see e.g. Fig. 2C).

The upload area 7 allows assigning a geospatial location 4 to the digital data that is within a limited surrounding of the data-providing device 1, i.e. the positon of the portable data-providing device 1 does not have to be the same, but can differ within limits. The limits of the upload area 7 are particularly in the same order than the size/radius of the predefined receiving area 5, e.g. the upload area 7 has radius smaller than 500 m, 50 m or 5 m.

In contrast to the upload area 7, the receiving area 5 defines the space within which the digital data can be received by the portable requesting device 2. The receiving area 2 extends particularly symmetrically and/or circular around the geospatial location 4 associated with the digital data.

According to another exemplary embodiment of the invention, a plurality of requesting devices is granted access to the digital data, if they are in the at least one receiving area. Thus, the invention is not limited to a single portable receiving device.

In terms of finding the digital data, the user of the portable requesting device is informed about the geospatial location 4 for example by showing a map particularly with directions to the geospatial location on the display of his smartphone.

Alternatively, an arrow-like symbol can point in a compass-like fashion towards the geospatial location of the digital data. Of course a variety of other options are conceivable.

In Fig. 3 temporal evolution of a method according to the invention is depicted. In the upper panel of Fig. 3 the data-providing device 1 transmits 104 its position and uploads 103 the data file to the server at a time point that is before the requesting device 2 sends a request 101 to download 102 the data file. In case the requesting device 2 is within the receiving area 5, the data file can be downloaded 102 by the requesting device 2.

In Fig. 3, lower panel, first the requesting device 2 sends the request 101 to the external server 3 and then the data file is provided 103, 104 together with a position by the data-providing device 1. At a later time point the requesting device 2 can then access/download 102 the data file from server 3.

## Claims

1. A method for providing geospatially limited access to digital data, comprising at least the steps of:
a) Transmitting (103) digital data, such as a file, from a portable data-providing device (1) to an external server (3);
b) Storing the transmitted digital data on the external server (3);
c) Associating the digital data with at least one geospatial location (4);
d) At the external server (3) receiving a request (101) from a requesting portable device (2) to provide the digital data to the requesting portable device (2);
e) The external server (3) granting access (102) to the digital data stored on the external server (3) to the requesting portable device (2), only if the requesting portable device (2) is within a predefined receiving area (5) around the at least one geospatial location (4) associated with the digital data.

2. The method according to claim 1, wherein the at least one geospatial location (4) is a geospatial location (4) determined from a position of the portable data-providing device (1) at a predefined instant, particularly wherein the predefined instant corresponds to the time when the portable data-providing device (1) makes an initial request to transmit (103) the digital data to the external server (3).

3. The method according to claim 1 or 2, wherein the at least one geospatial location (4) is a location within a predefined upload area (7) extending around the position of the portable data-providing device (1), particularly wherein the at least one geospatial location (4) corresponds to the position of the portable data-providing device (1).

4. The method according to one of the preceding claims, wherein a plurality of geospatial locations (4) are associated with the digital data, wherein the digital data is provided from the external server (3) to the requesting portable device (2), only if the requesting portable device (2) is within the predefined receiving area (5) of at least one geospatial location (4) of the plurality of geospatial locations (4) associated with the digital data, particularly wherein the geospatial locations (4) correspond to a plurality of positions of the portable data-providing device (1) at predefined instants.

5. The method according to one of the preceding claims, wherein a position of the requesting portable device (2) is repeatedly compared to the geospatial location (4) associated with the digital data, wherein if the position of the requesting portable device (2) is within the predefined receiving area (5) of the geospatial location (4) associated with the digital data, the external server (3) sends a proximity information to the requesting portable device (2), wherein the proximity information is indicative of the geospatial location (4) of the digital data.

6. The method according to one of the preceding claims, wherein the requesting portable device (2) comprises a user interface (200), wherein a signal is generated by the user interface (200), wherein the signal is indicative of the geospatial location (4) associated with the digital data, wherein the signal is configured to indicate a direction towards and/or a position of the geospatial location (4) associated with the digital data.

7. The method according to claim 6, wherein the user interface (200) is a display, wherein the signal is an image comprising a graphical representation, such as a symbol or a color indicative of the geospatial location (4) associated with the digital data, wherein the graphical representation is configured to indicate a direction towards and/or a position of the geospatial location (4) associated with the digital data.

8. The method according to claim 7, wherein the requesting portable device (2) comprises an image sensor (22), wherein the image sensor (22) records the image within which the graphical representation is arranged.

9. The method according to claim 6, wherein the user interface (200) is or comprises an output device for sound, wherein the signal is a sound indicative of the geospatial location (4) associated with the digital data, wherein sound is configured to indicate a direction towards and/or a position of the geospatial location (4) associated with the digital data.

10. The method according to one of the preceding claims, wherein access to the digital data is granted to the requesting portable device (2) only if the request (101) is sent or received by the external server (3) prior to a predefined expiration time or a predefined expiration date.

11. The method according to of the preceding claims, wherein the predefined receiving area (5) has a radius of less than 500 m, less than 5 m, or less than 1 m.

12. The method according to claim lone of the preceding claims, wherein the size of the predefined receiving area (5) or the radius of the predefined receiving area (5) can be adjusted by a user of the portable data-providing device (1).

13. The method according to one of the preceding claims, wherein the access (102) to the digital data is granted to the requesting portable device (2), when the data-providing device (1) is outside the predefined receiving area (5) and/or outside the predefined upload area (7).

14. The method according to one of the preceding claims, wherein the digital data is transmittable or is transmitted (102) from the external server (3) to the requesting portable device (2) only once.

15. The method according to one of the claims 1 to 13, wherein the digital data is transmittable or transmitted (102) more than once from the external server (3) to the requesting portable device (2).
